(19) **Europäisches Patentamt**

**European Patent Office**

**Office européen des brevets**

(11) **EP 1 224 455 B1**

(12) **FASCICULE DE BREVET EUROPEEN**

(45) Date de publication et mention
de la délivrance du brevet:
**01.02.2006 Bulletin 2006/05**

(51) Int Cl.:
***G01N 27/447*** *(2006.01)*

(21) Numéro de dépôt: **00971504.6**

(22) Date de dépôt: **25.10.2000**

(86) Numéro de dépôt international:
**PCT/FR2000/002974**

(87) Numéro de publication internationale:
**WO 2001/031325 (03.05.2001 Gazette 2001/18)**

(54) **PROCEDE DE SEPARATION D'UN COMPOSE CHIMIQUE OU BIOLOGIQUE DANS UN MELANGE DE COMPOSES SIMILAIRES PAR DIFFUSION DANS UN MILIEU TEL QU'UN GEL**

TRENNUNGSVERFAHREN EINER CHEMISCHEN ODER BIOLOGISCHEN VERBINDUNG IN EINER MISCHUNG VON ÄHNLICHEN VERBINDUNGEN DURCH DIFFUSION IN EINEM MEDIUM WIE EINEM GEL

METHOD FOR SEPARATING A CHEMICAL OR BIOLOGICAL COMPOUND IN A MIXTURE OF SIMILAR COMPOUNDS BY DIFFUSION IN A MEDIUM SUCH AS A GEL

(84) Etats contractants désignés:
**AT BE CH CY DE DK ES FI FR GB GR IE IT LI LU MC NL PT SE**

(30) Priorité: **26.10.1999 FR 9913366**

(43) Date de publication de la demande:
**24.07.2002 Bulletin 2002/30**

(73) Titulaire: **CENTRE NATIONAL DE LA RECHERCHE SCIENTIFIQUE (CNRS)**
**75794 Paris Cedex 16 (FR)**

(72) Inventeurs:
• **JULLIEN, Ludovic**
  **F-94110 Arcueil (FR)**
• **LEMARCHAND, Hervé**
  **F-91360 Villemoisson sur Orge (FR)**
• **LEMARCHAND, Annie**
  **F-91360 Villemoisson sur Orge (FR)**

(74) Mandataire: **Vaillant, Jeanne et al**
**Ernest Gutmann - Yves Plasseraud S.A.S.**
**3, rue Auber**
**75009 Paris (FR)**

(56) Documents cités:
**WO-A-99/45374**          **US-A- 5 059 294**
**US-A- 5 084 157**

**Description**

L'invention concerne un procédé de séparation d'un composé chimique ou biologique présent dans un mélange de composés similaires, par diffusion dans un milieu approprié tel qu'un gel.

Les méthodes connues de séparation d'un composé présent dans un mélange comprennent en général l'application d'une réaction chimique (au sens large) et/ou d'un ensemble de forces extérieures au mélange de composés. Par exemple, WO 99/45374 décrit la séparation d'un analyte d'autres composants d'un échantillon, par un procédé d'électrophorèse par affinité. Les chromatographies d'affinité permettent d'extraire d'un mélange les molécules les plus retenues ou les molécules les moins retenues vis-à-vis des sites d'interaction liés au support chromotographique, car ces molécules occupent des positions privilégiées, en tête et en queue d'élution. Toutefois, notamment quand le mélange contient une dizaine ou plus de composés similaires, il est difficile d'isoler des composés à affinité intermédiaire, très difficile d'isoler des composés à affinité quantitativement définie, et impossible de séparer des composés dont les affinités seraient identiques, mais qui auraient des constantes cinétiques d'interaction distinctes.

Le problème de la séparation de composés présents dans un mélange et ayant des constantes cinétiques d'interaction pour une cible donnée qui sont arbitrairement définies par un opérateur, se pose notamment dans le cadre du développement de nouveaux traitements thérapeutiques reposant sur l'optimisation de l'interaction de molécules avec des cibles d'intérêt biologique convenablement choisies (séquences génomiques, protéines, ...) et dans le domaine de la chimie combinatoire, où les molécules testées sont souvent obtenues sous la forme de "mélanges contrôlés" de molécules similaires.

La présente invention a notamment pour but d'apporter à ce problème une solution simple, efficace et relativement facile à mettre en oeuvre.

Elle propose à cet effet un procédé de séparation d'un composé chimique ou biologique dans un mélange de composés similaires, par diffusion dans un milieu tel qu'un gel, ce procédé comprenant une étape d'introduction du mélange de composés dans le milieu, caractérisé en ce qu'il consiste :

- à faire réagir dans le milieu les composés Ci du mélange avec un composant P présent dans le milieu pour obtenir des produits $Q_i$, les réactions $C_i + P \rightarrow Q_i$ étant réversibles et ayant des constantes cinétiques $k_{1,i}$ dans le sens de l'obtention des produits $Q_i$ et $k_{2,i}$ dans le sens inverse, et
- à appliquer au milieu un champ variant périodiquement dans le temps et auquel les composés Ci sont sensibles, la période du champ et la concentration du composant P dans le milieu étant déterminées en fonction des constantes cinétiques $k_1$, $k_2$ du composé C à séparer pour établir des conditions de résonance entre les réactions précitées et le champ, pour lesquelles le composé C a un coefficient de diffusion apparent dans le milieu qui est à une valeur maximale.

Selon l'invention, la connaissance des constantes cinétiques de réaction d'un composé C avec une cible, permet de déterminer une concentration de la cible dans le milieu et une périodicité du champ pour lesquelles le coefficient de diffusion apparent du composé sera maximal et largement supérieur aux coefficients de diffusion apparents des autres composés, de sorte que ce composé sera séparé nettement des autres par diffusion dans le milieu.

Même lorsque les composés présents dans le mélange ont sensiblement le même comportement dans le milieu et ne diffèrent les uns des autres que par des constantes cinétiques d'interaction avec une cible préalablement définie, le procédé selon l'invention permet de définir une concentration de cible dans le milieu et une période du champ appliqué au milieu pour lesquelles le coefficient de diffusion apparent dans le milieu du composé à séparer est maximal par suite d'une résonance stochastique entre les réactions et le champ appliqué.

Par exemple, lorsque l'une des constantes cinétiques du composé C à séparer diffère de celles des autres composés du mélange d'un ordre de grandeur, les autres caractéristiques des composés étant identiques ou similaires, le coefficient de diffusion apparent du composé C dans le milieu est au moins 3,5 fois supérieur à celui des autres composés du mélange, ce qui permet non seulement de le séparer des autres composés par diffusion, mais également de l'extraire du milieu avec un rendement intéressant et un degré de pureté relativement élevé.

Dans un mode de réalisation préféré de l'invention, le champ appliqué au milieu est un champ électrique et le procédé est mis en oeuvre dans un dispositif classique d'électrophorèse, comprenant par exemple une cuve remplie d'électrolyte et dans laquelle est placée une plaque d'un gel approprié, et des électrodes disposées dans la cuve autour de la plaque de gel et reliées à des moyens d'alimentation électrique permettant d'appliquer un champ électrique uniforme dans l'espace et variant périodiquement dans le temps à la plaque de gel.

Dans une variante, le champ précité est un champ de vitesses dans le milieu et le procédé est mis en oeuvre dans un descriptif de chromatographie par exemple du type HPLC (High Performance Liquid Chromatography) dans lequel un champ de vitesses homogène d'un fluide porteur inerte est créé dans le milieu au moyen d'une ou de deux pompes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- la figure 1 représente schématiquement des moyens de mise en oeuvre de l'invention dans le mode de réalisation préféré où le champ appliqué au milieu est un champ électrique ;
- la figure 2 est un graphe représentant les variations du rapport des coefficients de diffusion apparent et intrinsèque d'un composé C en fonction d'un paramètre A correspondant à l'amplitude du champ, dans les conditions de la résonance et dans des conditions différentes ;
- la figure 3 est un graphe représentant la variation du rapport des coefficients de diffusion apparent et intrinsèque en fonction des valeurs de paramètres correspondant aux constantes cinétiques de réaction du composé ;
- la figure 4 est un graphe représentant les variations de la pureté et du rendement dans le cas de la diffusion pure d'un mélange équimolaire de deux composés ayant des coefficients de diffusion différents, en fonction d'un paramètre sans dimension.

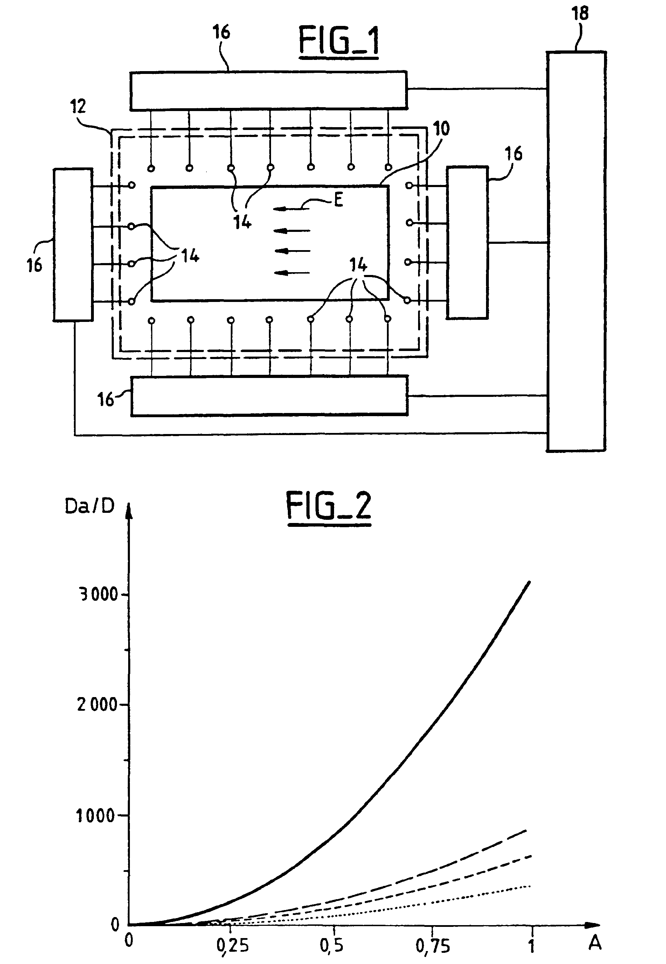

Dans la représentation schématique de la figure 1 qui concerne un mode de réalisation de l'invention dans lequel le procédé est mis en oeuvre au moyen d'un dispositif d'électrophorèse, la référence 10 désigne une plaque d'un milieu tel que du gel, par exemple du gel d'agarose, d'un type utilisé couramment en électrophorèse.

La plaque de gel 10 est placée dans une cuve d'électrophorèse 12 dont le contour est indiqué en tirets, et dans laquelle sont disposées des rangées d'électrodes 14, formées par exemple par des fils électriquement conducteurs qui s'étendent perpendiculairement au plan du dessin.

Les électrodes 14 sont par exemple disposées autour des quatre côtés de la plaque de gel 10 et sont reliées à des circuits 16 d'alimentation électrique, eux-mêmes reliés à des moyens de commande 18 éventuellement pilotés par ordinateur.

Ces moyens 16 d'alimentation et 18 de commande permettent d'appliquer à la plaque de gel 10 un champ électrique qui varie périodiquement dans le temps et qui est sensiblement uniforme dans l'espace, c'est-à-dire qui est le même en tout point de la plaque de gel 10, ce champ électrique étant par exemple orienté dans le plan de la plaque de gel, dans le sens indiqué par les flèches E.

Cette technique est connue en électrophorèse et décrite dans les documents WO 84/02001 et US 5 084 157 auxquels on pourra se reporter pour davantage de précisions.

Le procédé selon l'invention diffère des techniques connues d'électrophorèse essentiellement en ce que l'électrophorèse résultant de l'application d'un champ électrique périodique à un mélange de composés, a lieu en milieu réactif et en ce que le champ électrique varie périodiquement autour d'une valeur moyenne nulle.

Selon l'invention, on utilise un milieu 10 qui contient une concentration déterminée d'un composant P qui réagit avec les composés contenus dans un mélange injecté en un point du milieu 10, les composés $C_i$ de ce mélange réagissant avec le composant P pour former des produits $Q_i$ qui se décomposent eux-mêmes en produits initiaux $C_i$ et P, comme indiqué ci-dessous :

$$C_i + P \underset{k_{2,i}}{\overset{k_{1,i}}{\rightleftarrows}} Q_i$$

où $k_{1,i}$ et $k_{2,i}$ sont les constantes cinétiques des réactions dans un sens et dans le sens inverse et varient d'un composé $C_i$ à l'autre, $k_{1,i}$ étant un nombre de réactions par unité de concentration et par unité de temps, $k_{2,i}$ étant un nombre de réactions par unité de temps.

Dans ce qui suit, on se place dans le cas le plus difficile où les composés $C_i$ formant le mélange injecté dans le milieu 10 sont supposés avoir la même masse m, la même charge électrique z, le même coefficient de frottement γ dans le milieu et le même coefficient de diffusion D dans ce milieu. Le composant P présent dans le milieu 10 est supposé insensible au champ électrique et immobile ou pouvant diffuser faiblement dans le milieu 10, soit parce qu'il est fixé par covalence, soit parce que sa dimension restreint son déplacement dans le milieu 10. Les composés $Q_i$ peuvent être mobiles à condition de présenter une réponse à l'action du champ distincte de celle des composés $C_i$.

On suppose également que la concentration du composant P est sensiblement uniforme dans le milieu 10 et est maintenue sensiblement constante dans ce milieu pendant toute la séparation.

Lorsque le champ électrique appliqué au milieu 10 est à variation sinusoïdale dans le temps et est par exemple de la forme E(t) = acos (ωt), on peut calculer la valeur moyenne $\overline{x_c}(t)$ et la variance $\sigma_c^2(t)$ de la position x du composé C le long d'un axe parallèle au champ électrique appliqué au milieu 10. On obtient alors la formule suivante :

$$\overline{x_C}(t) = \frac{A}{(c_1 + c_2)^2 + \omega^2}\left[c_1(1 + \cos\omega t) + \frac{c_1 c_2 + c_2^2 + \omega^2}{\omega}\sin\omega t\right]$$

et de même :

$$\overline{x_Q}(t) = \frac{A}{(c_1 + c_2)^2 + \omega^2}\left[c_1 + \frac{c_2}{\omega}\left((c_1 + c_2)\sin\omega t - \omega\cos\omega t\right)\right]$$

où :

$$A = \frac{za}{m\gamma}$$

est une amplitude recalibrée du champ électrique,
$c_1 = k_1 p$, p étant la concentration de P dans le milieu 10
$c_2 = k_2$
$c_1$ et $c_2$ étant exprimés en s$^{-1}$.

Bien que le champ électrique appliqué soit nul en moyenne, la position moyenne des composés $C_i$ et $Q_i$ oscille autour d'une valeur différente de l'origine en raison de l'asymétrie des conditions initiales, le système gardant partiellement en mémoire la première excursion du champ électrique. Si on néglige les termes constants et les termes oscillants, et pour des P et des $Q_i$ immobiles, la variance de position associée aux distributions $C_i(x,t)$ et $Q_i(x,t)$ se réduit après un régime transitoire très court à :

$$\sigma_C^2(t) = \sigma_Q^2(t) = 2\,D_a\,t$$

$$\text{où } D_a = \frac{c_2}{c_1 + c_2}\left[D + A^2\frac{c_1}{2((c_1 + c_2)^2 + \omega^2)}\right]$$

$D_a$ étant le coefficient de diffusion apparent d'un couple $C_i$, $Q_i$ et D étant le coefficient de diffusion intrinsèque du composé $C_i$.

Lorsque l'amplitude du champ électrique est suffisante pour que la relation ci-dessous soit satisfaite :

$$A^2 \gg \frac{2D}{c_1}\left((c_1 + c_2)^2 + \omega^2\right),$$

la diffusion apparente ne dépend pas de D et est commandée uniquement par les réactions chimiques et le champ électrique, le coefficient de diffusion apparent étant donné par la relation ci-dessous :

4

$$D_a = A^2 \frac{c_1 c_2}{2(c_1 + c_2)[(c_1 + c_2)^2 + \omega^2]} \, .$$

Dans ce cas, on a $A = za/m\gamma$ lorsque les $Q_i$ sont immobiles, ou $A = za/m\gamma - z_Q\, a/m_Q\gamma_Q$ où $z_Q$ est la charge portée par les $Q_i$, $m_Q$ la masse des $Q_i$ et $\gamma_Q$ le coefficient de friction des $Q_i$ lorsque les $Q_i$ sont mobiles.

Ce coefficient de diffusion apparent peut prendre une valeur arbitrairement grande définie par la valeur de l'amplitude recalibrée A du champ électrique.

Ce coefficient de diffusion apparent est une fonction de $c_1$ et $c_2$ et comprend un seul maximum (quand le champ électrique a une amplitude suffisante) qui est obtenu pour :

$$c_1^R = c_2^R = \omega/2$$

ou, de façon équivalente, :

$$k_1^R \cdot p = k_2^R = \pi/T$$

où l'exposant R exprime une condition de résonance et T est la période du champ électrique.

En figure 2, la courbe en traits pleins indique la variation du rapport $D_a/D$ en fonction de A à la résonance, la courbe en tirets longs indique la variation de ce rapport en fonction de A pour des constantes cinétiques $k_1^R$ et $k_2^R/10$, la courbe en tirets courts indique la variation de ce rapport en fonction de A pour des constantes cinétiques $10k_1^R$, $10k_2^R$, et la courbe en pointillés indique la variation de ce rapport pour des constantes cinétiques égales à $10k_1^R$ et $k_2^R$.

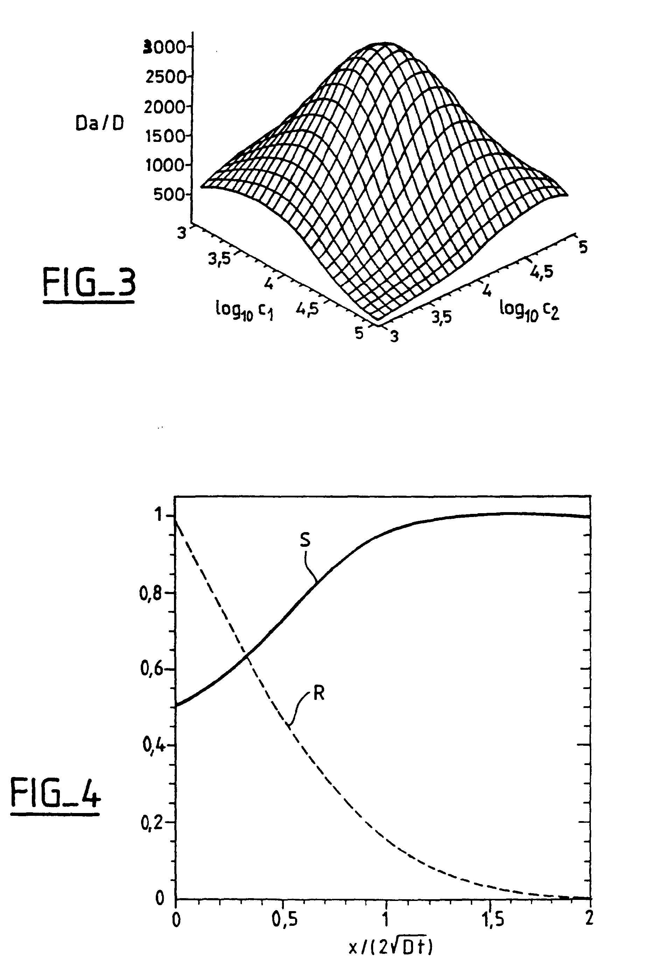

La figure 3 représente la variation du rapport $D_a/D$ en fonction des logarithmes à base 10 de $c_1$ et $c_2$, le maximum de la variation correspondant aux conditions de résonance précitées.

Si l'on considère les réactions chimiques comme des événements aléatoires, les transitions entre $C_i$ et $Q_i$ sont des événements stochastiques et le maximum de la valeur de $D_a$ est obtenu pour des conditions qui correspondent à une résonance stochastique entre les réactions chimiques et le champ électrique appliqué au milieu 10.

C'est cette résonance, qui se traduit par une valeur maximale du coefficient de diffusion apparent d'un composé C, qui permet de séparer ce composé C des autres composants $C_i$ présents dans le mélange. On peut calculer en particulier que, si l'une des constantes cinétiques d'un composé $C_i$ est égale à la constante cinétique du composé C pour lequel il y a résonance et que l'autre constante cinétique du composé $C_i$ diffère d'un facteur 10 de l'autre constante cinétique du composé C, le coefficient de diffusion apparent du composé $C_i$ sera 3,5 fois plus faible environ que celui du composant C.

Cette différence de diffusion permet de bien séparer le composé C des composants $C_i$ similaires, même lorsque ces derniers ont sensiblement la même charge électrique, la même masse et le même coefficient de frottement que C, ou bien sensiblement le même rapport $z/m.\gamma$ que C (la valeur de A étant sensiblement la même pour tous ces composants) et diffèrent les uns des autres au moins par la valeur d'une constante cinétique de réaction avec le composant (P).

Le champ électrique appliqué au milieu 10 peut varier périodiquement dans le temps d'une façon quelconque : la variation peut être sinusoïdale, en créneau, ou autre.

La plus grande diffusion du composé C correspondant aux conditions de résonance permet de le séparer des autres composés $C_i$ du mélange et de le récupérer, en partie, aux extrémités du profil de distribution dans le milieu 10. On peut dans le cas de la diffusion pure d'un mélange de deux composés ($C_1$, $C_2$) ayant la même concentration et des coefficients de diffusion intrinsèques différents, calculer une pureté et un rendement de la récupération du composé $C_1$ par les formules suivantes:

$$\text{pureté} : S(\alpha_1) = \frac{I(\alpha_1)}{I(\alpha_1) + I(\alpha_2)}$$

$$\text{rendement} : R(\alpha_1) = \frac{2I(\alpha_1)}{N}$$

où : N est la quantité du composé $C_1$ injectée dans le milieu 10 au temps t = 0 au point x = 0,
I est l'intégrale de la concentration $C_1(x, t)$ entre x et l'infini,

$$\alpha_1 = \frac{x}{2\sqrt{D_1 t}} \qquad \text{et} \quad \alpha_2 = \frac{x}{2\sqrt{D_2 t}}$$

On a représenté en figure 4 la variation de la pureté S et du rendement R en fonction de $\alpha$. On voit sur cette figure qu'en choisissant une pureté désirée, on peut déterminer la valeur de $\alpha$ et donc celle de x à partir de laquelle on pourra récolter le composé C, et le rendement que l'on obtiendra. Lorsque les coefficients de diffusion des deux composés $C_1$ et $C_2$ diffèrent dans un rapport de 3,5, on peut recueillir 25 % du composé $C_1$, avec une pureté de 90 %, pour $\alpha_1 = 0,85$.

On va maintenant décrire brièvement un exemple d'application de l'invention, permettant de fixer les idées. Cet exemple concerne la réaction chimique d'hybridation d'échantillons d'ADN sur de l'ARN en solution. Dans le cas d'échantillons d'oligodéoxyribonucléotides sur une cible ARN comprenant un site de liaison primaire de la transcriptase inverse HIV-1, le processus de liaison est caractérisé par les valeurs suivantes :

$$3 \times 10^4 \ M^{-1} \ s^{-1} \leq k_1 \leq 10^6 \ M^{-1} \ s^{-1}$$

$$10^{-3} \ s^{-1} \leq k_2 \leq 2,5.10^{-2} \ s^{-1}$$

$$D = 3.10^{-10} \ m^2 \ s^{-1}$$

$$2,7.10^{-18} C \leq z \leq 5,9.10^{-18} C.$$

La première condition de résonance $k_1.p = k_2$ donne des concentrations d'ARN dans le milieu 10 comprises entre $10^{-9}$M et $10^{-6}$M, que l'on peut obtenir sans difficultés.

La seconde condition de résonance $\omega = 2k_2$ conduit à $\omega$ compris entre $2.10^{-3}$ s$^{-1}$ et $5.10^{-2}$ s$^{-1}$ et est facile à satisfaire.

La dernière condition relative à l'amplitude du champ électrique est satisfaite lorsque cette amplitude est très supérieure à $4.10^{-5}$ V$\mu$m$^{-1}$, ce qui ne pose aucun problème technique.

En accordant les valeurs de $\omega$ et p aux valeurs de $k_1$ et $k_2$ d'un échantillon donné, on peut séparer cet échantillon des autres en le plaçant dans les conditions de résonance stochastique entre la réaction de fixation sur l'ARN et le champ électrique.

Selon un autre aspect particulièrement intéressant de l'invention, on peut utiliser également un champ non-électrique, capable d'agir sur des composés indépendamment de leur charge électrique. Par exemple, on utilise à cette fin un dispositif chromatographique du type HPLC dans lequel une ou deux pompes créent dans le milieu un champ de vitesses homogène que l'on fait varier de façon périodique dans le temps, ces vitesses pouvant être comparables aux vitesses de déplacement que l'on obtient par application d'un champ électrique. La grandeur A mentionnée dans la description qui précède est la valeur de la vitesse créée dans le milieu par la pompe.

Par ailleurs, il n'est pas nécessaire que le composant P et les produits Qi restent immobiles dans le milieu soumis au champ périodique, il suffit que les produits Qi répondent à l'application de ce champ d'une façon différente de celle des composants Ci.

De façon générale, le procédé selon l'invention s'applique à la séparation de molécules de taille relativement faible à importante (variant de 10 à $10^6$ Daltons environ), des protéines, des oligonucléotides, des oligosaccharides, cette séparation résultant de la combinaison dans un milieu d'une réaction chimique et d'un champ uniforme quelconque à variation périodique dans le temps.

**Revendications**

1.   Procédé de séparation d'un composé chimique ou biologique présent dans un mélange de composés similaires, par diffusion dans un milieu (10) tel qu'un gel, ce procédé comprenant une étape d'introduction du mélange de composés dans le milieu, **caractérisé en ce qu'**il consiste :

- à faire réagir dans le milieu (10) les composés ($C_i$) du mélange avec un composant (P) présent dans le milieu pour obtenir des produits ($Q_i$), les réactions $C_i + P \rightarrow Q_i$ étant réversibles et ayant des constantes cinétiques ($k_{1,i}$) dans le sens de l'obtention des produits ($Q_i$) et ($k_{2,i}$) dans le sens inverse, et
- à appliquer au milieu (10) un champ variant périodiquement dans le temps et auquel les composés ($C_i$) sont sensibles, la période du champ (T) et la concentration (p) du composant (P) dans le milieu (10) étant déterminées en fonction des constantes cinétiques ($k_1$, $k_2$) du composé (C) à séparer pour établir des conditions de résonance entre les réactions précitées et le champ pour lesquelles le composé (C) a un coefficient de diffusion apparent ($D_a$) dans le milieu (10) dont la valeur est maximale.

2.   Procédé selon la revendication 1, **caractérisé en ce que** l'amplitude du champ est supérieure à une valeur limite

$$a_t = \frac{m\gamma}{z} \sqrt{\frac{2D}{k_1 p}\left((k_1 p + k_2)^2 + \left(\frac{2\pi}{T}\right)^2\right)}$$

fonction des constantes cinétiques précitées et du coefficient (D) de diffusion intrinsèque du composé (C), (m) étant la masse, (z) la charge et ($\gamma$) le coefficient de frottement du composé (C).

3.   Procédé selon la revendication 1 ou 2, **caractérisé en ce que** les composés ($C_i$) dans le mélange diffèrent les uns des autres au moins par la valeur d'une constante cinétique de réaction avec le composant (P).

4.   Procédé selon la revendication 3, **caractérisé en ce que** l'une des constantes cinétiques du composé (C) à séparer diffère de celles des autres composés du mélange d'au moins un ordre de grandeur.

5.   Procédé selon l'une des revendications précédentes, **caractérisé en ce que** la période du champ est sensiblement égale à $\pi/k_2$ et la concentration du composant (P) dans le milieu (10) est sensiblement égale à $k_2/k_1$.

6.   Procédé selon l'une des revendications précédentes, **caractérisé en ce que** la concentration du composant (P) dans le milieu (10) est maintenue sensiblement constante pendant la séparation.

7.   Procédé selon l'une des revendications précédentes, **caractérisé en ce que** l'amplitude du champ varie autour d'une valeur moyenne nulle.

8.   Procédé selon l'une des revendications précédentes, **caractérisé en ce que** le champ est sensiblement uniforme dans le milieu (10).

9.   Procédé selon l'une des revendications précédentes, **caractérisé en ce que** le champ précité est un champ électrique.

10.   Procédé selon l'une des revendications 1 à 8, **caractérisé en ce que** le champ précité est un champ de vitesses dans le milieu.

**11.** Procédé selon l'une des revendications précédentes, **caractérisé en ce que** le composant (P) et les produits (Qi) restent sensiblement immobiles dans le milieu (10) soumis au champ précité.

**12.** Procédé selon l'une des revendications 1 à 10, **caractérisé en ce que** les produits (Qi) répondent au champ appliqué au milieu (10) d'une façon différente de celle des composés (Ci).

**13.** Procédé selon l'une des revendications précédentes, **caractérisé en ce que** les composés à séparer sont des molécules de taille comprise entre 10 et $10^6$ Daltons environ.

**14.** Procédé selon l'une des revendications précédentes, **caractérisé en ce que** les composés à séparer sont des protéines, des oligonucléotides ou des oligosaccharides.

**Patentansprüche**

**1.** Verfahren zur Trennung einer chemischen oder biologischen Verbindung, die in einer Mischung von ähnlichen Verbindungen vorhanden ist, durch Diffusion in einem Medium (10) wie einem Gel, wobei das Verfahren einen Schritt des Einführens der Mischung von Verbindungen in das Medium aufweist, **dadurch gekennzeichnet, dass** es darin besteht:

- die Verbindungen ($C_i$) der Mischung mit einem Bestandteil (P), der in dem Medium vorhanden ist, in dem Medium (10) reagieren zu lassen, um Produkte ($Q_i$) zu erhalten, wobei die Reaktionen $C_i + P \rightarrow Q_i$ reversibel sind und kinetische Konstanten ($k_{1,\,i}$) in der Richtung des Erhaltens der Produkte ($Q_i$) und ($k_{2,i}$) in der umgekehrten Richtung aufweisen, und
- auf das Medium (10) ein Feld anzuwenden, das periodisch über der Zeit variiert und auf das die Verbindungen ($C_1$) ansprechen, wobei die Periode des Felds (T) und die Konzentration (p) des Bestandteils (P) in dem Medium (10) in Funktion der kinetischen Konstanten ($k_1$, $k_2$) der zu trennenden Verbindung (C) bestimmt werden, um Bedingungen der Resonanz zwischen den vorgenannten Reaktionen und dem Feld aufzustellen, für welche die Verbindung (C) einen sichtbaren Diffusionskoeffizienten ($D_a$) in dem Medium (10) aufweist, dessen Wert maximal ist.

**2.** Verfahren gemäß Anspruch 1, **dadurch gekennzeichnet, dass** die Feldamplitude höher ist als ein Grenzwert

$$a_t = \frac{m\gamma}{z}\sqrt{\frac{2D}{k_1 p}\left((k_1 p + k_2)^2 + \left(\frac{2\pi}{T}\right)^2\right)}$$

wobei vorgenannte Funktion der kinetischen Kostanten und des Diffusionskoeffizienten (D) intrinsisch ist zur Verbindung (C), (m) die Masse, (z) die Ladung und (γ) der Reibungskoeffizient der Verbindung (C) ist.

**3.** Verfahren gemäß Anspruch 1 oder 2, **dadurch gekennzeichnet, dass** sich die verbindungen ($C_i$) in der Verbindung voneinander wenigstens durch den Wert einer kinetischen Konstante der Reaktion mit dem Bestandteil (P) unterscheiden.

**4.** Verfahren gemäß Anspruch 3, **dadurch gekennzeichnet, dass** sich eine der Kinetischen Konstanten der zu trennenden Verbindung (C) von jenen der anderen Verbindung der Mischung um wenigstens eine Größenordnung unterscheidet.

**5.** Verfahren gemäß einem der vorausgegangenen Ansprüche, **dadurch gekennzeichnet, dass** die Periode des Felds im wesentlichen gleich $\pi/k_2$ und die Konzentration des Bestandteils (P) in dem Medium (10) im Wesentlichen gleich $k_2/k_1$ ist

**6.** Verfahren gemäß einem der vorausgegangenen Ansprüche, **dadurch gekennzeichnet, dass** die Konzentration des Bestandteils (P) in dem Medium (10) während des Trennens im Wesentlichen konstant gehalten wird.

**7.** Verfahren gemäß einem der vorausgegangenen Ansprüche, **dadurch gekennzeichnet, dass** die Feldamplitude um einen Mittelwert Null variiert.

8. Verfahren gemäß einem der vorausgegangenen Ansprüche, **dadurch gekennzeichnet, dass** das Feld in dem Medium (10) im Wesentlichen gleichförmig ist.

9. Verfahren gemäß einem der vorausgegangenen Ansprüche, **dadurch gekennzeichnet, dass** das vorgenannte Feld ein elektrisches Feld ist.

10. Verfahren gemäß einem der vorausgegangenen Ansprüche, **dadurch gekennzeichnet, dass** das vorgenannte Feld ein Geschwindigkeitsfeld in dem Medium ist.

11. Verfahren gemäß einem der vorausgegangenen Ansprüche, **dadurch gekennzeichnet, dass** der Bestandteil (P) und die Produkte (Qi) in dem Medium (10), welches dem vorgenannten Feld unterliegt, im Wesentlichen immobil bleiben.

12. Verfahren gemäß einem der Ansprüche 1 bis 10, **dadurch gekennzeichnet, dass** die Produkte (Qi) auf das Feld, das auf das Medium angewendet wird, auf eine andere Weise reagieren als die Verbindungen (Ci).

13. Verfahren gemäß einem der vorausgegangenen Ansprüche, **dadurch gekennzeichnet, dass** die zu trennenden Verbindungen Moteküle mit einer Größe zwischen ungefähr 10 und $10^6$ Dalton sind.

14. Verfahren gemäß einem der vorausgegangenen Ansprüche, **dadurch gekennzeichnet, dass** die zu trennenden Verbindungen Proteine, Oligonukleotide oder Oligosaccharide sind.

**Claims**

1. A method for separating a chemical or biological compound present in a mixture of similar compounds by diffusion in a medium (10) such as a gel, the method comprising a step for introducing a mixture of compounds into the medium, **characterized in that** it consists of:

   • reacting the compounds ($C_i$) of the mixture in the medium (10) with a component (P) present in the medium to obtain products ($Q_i$), the reactions $C_i + P \rightarrow Q_i$ being reversible and having kinetic constants $k_{l,i}$ in the direction of production of products ($Q_i$) and ($k_{2,i}$) in the reverse direction; and
   • applying to the medium (10) a field that varies periodically with time and to which compounds ($C_i$) are sensitive, the period of the field (T) and the concentration (p) of component (P) in the medium (10) being determined as a function of the kinetic constants ($k_1$, $k_2$) of the compound (C) to be separated to establish resonance conditions between said reactions and the field, for which compound C has an apparent diffusion coefficient ($D_a$) in the medium (10) that is a maximum value.

2. A method according to claim 1, **characterized in that** the amplitude of the field is higher than a limiting value

$$a_l = \frac{m\gamma}{z} \sqrt{\frac{2D}{k_1 p}\left( (k_1 p + k_2)^2 + \left(\frac{2\pi}{T}\right)^2 \right)}$$

that is a function of said kinetic constants and of the intrinsic diffusion coefficient (D) of compound (C), (m) being the mass, (z) being the charge and ($\gamma$) being the coefficient of friction of the compound (C).

3. A method according to claim 1 or claim 2, **characterized in that** the compounds ($C_i$) in the mixture differ from each other at least in the value of one kinetic constant for reaction with component (P).

4. A method according to claim 3, **characterized in that** one of the kinetic constants of compound (C) to be separated differs from those of the other compounds in the mixture by at least one order of magnitude.

5. A method according to any one of the preceding claims, **characterized in that** the period of the field is substantially equal to $\pi/k_2$ and the concentration of component (P) in the medium (10) is substantially equal to $k_2/k_1$.

6. A method according to any one of the preceding claims, **characterized in that** the concentration of component (P) in medium (10) is kept substantially constant during separation.

7. A method according to any one of the preceding claims, **characterized in that** the amplitude of the field varies about a zero mean value.

8. A method according to any one of the preceding claims, **characterized in that** the field is substantially uniform in the medium (10).

9. A method according to any one of the preceding claims, **characterized in that** said field is an electric field.

10. A method according to any one of the preceding claims, **characterized in that** said field is a velocity field in the medium.

11. A method according to any one of the preceding claims, **characterized in that** the component (P) and products $(Q_i)$ remain substantially immobile in the medium (10) subjected to said field.

12. A method according to any one of the preceding claims, **characterized in that** the products $(Q_i)$ respond to the field applied to the medium (10) in a manner that is different from that of compounds $(C_i)$.

13. A method according to any one of the preceding claims, **characterized in that** the compounds to be separated are molecules with a size in the range about 10 to $10^6$ Daltons.

14. A method according to any one of the preceding claims, **characterized in that** the compounds to be separated are proteins, oligonucleotides or oligosaccharides.

## FIG_1

## FIG_2

FIG_3

$Da/D$

$\log_{10} c_1$

$\log_{10} c_2$

FIG_4

S

R

$x/(2\sqrt{Dt})$